Europäisches Patentamt

European Patent Office

Office européen des brevets

(11) Veröffentlichungsnummer: **0 290 381**
**A2**

(12) **EUROPÄISCHE PATENTANMELDUNG**

(21) Anmeldenummer: 88810224.1

(22) Anmeldetag: 07.04.88

(51) Int. Cl.⁴: **A 23 B 4/04**

(30) Priorität: 07.04.87 CH 1329/87

(43) Veröffentlichungstag der Anmeldung:
09.11.88 Patentblatt 88/45

(84) Benannte Vertragsstaaten:
AT BE CH DE ES FR GB IT LI LU NL SE

(71) Anmelder: **Matti, Max**
**Hölzlisberg 4**
**CH-9453 Eichberg (CH)**

(72) Erfinder: **Matti, Max**
**Hölzlisberg 4**
**CH-9453 Eichberg (CH)**

(74) Vertreter: **Kulhavy, Sava, Dipl.-Ing.**
**Patentanwaltsbüro S.V. Kulhavy Postfach 450**
**Kornhausstrasse 3**
**CH-9001 St. Gallen (CH)**

(54) **Einrichtung zum Räuchern.**

(57) Die Einrichtung zum Räuchern enthält eine Räucherkammer (1) und einen Raucherzeuger (10). Der Raucherzeuger (10) befindet sich unterhalb der Räucherkammer (1) und er steht mit der Räucherkammer (1) in Wärmekontakt. An einer der vertikalen Wände (12) des Raucherzeugers (10) ist ein Gebläse (16) angebracht, dessen Austrittsöffnung (15) in das Gehäuse (11) des Raucherzeugers (10) mündet. An einer weiteren Wand des Gehäuses (11) sind Rohre (20) angeschlossen, mit deren Hilfe der Rauchgenerator (10) an die Räucherkammer (1) strömungsmässig angeschlossen ist. An der Innenseite einer der Seitenwände des Gehäuses (11) ist ein Heizstab (25) zum Anzünden des Brennmaterials (19) im Raucherzeuger (10) angebracht.

Diese Einrichtung ist eine unaufwändige Räuchereinrichtung, mit deren Hilfe Ware nicht nur warm sondern auch kalt geräuchert werden kann.

Fig. 2

**Beschreibung**

## EINRICHTUNG ZUM RAEUCHERN

Die vorliegende Erfindung betrifft eine Einrichtung zum Räuchern, mit einer Räucherkammer und einem Rauchgenerator. der an die Räucherkammer strömungsmässig angeschlossen ist.

Der Rauchgenerator bei bekannten Einrichtungen dieser Gattung ist meistens neben der Räucherkammer angeordnet und an diese mit Hilfe geeigneter Rohrleitungen angeschlossen. In diesen Rohrleitungen ist oft ein Gebläse untergebracht, welches Rauch aus dem Rauchgenerator ansaugt und zur Räucherkammer befördert. Durch eine geeignete Ausführung des Rauchgenerators kann man Fleisch- und Wurstwaren nicht nur kalträuchern sondern auch heissräuchern.

Fisch muss nach einer anfänglichen heissen Phase des Räucherns kaltgeräuchert werden. Hierbei muss dafür gesorgt werden. dass die Temperatur von Fisch einen bestimmten Wert, beispielsweise von 28 Grad Celsius. nicht übersteigt. Diese Anforderung führt zu komplizierten Steuervorrichtungen bei bekannten Einrichtungen dieser Gattung, die vor allem im Dauerbetrieb zuverlässig funktionieren sollen. Deswegen werden meistens nur Grossanlagen zum Kalträuchern gebaut. Ein Hotel oder ein Restaurant kann sich eine so komplizierte Einrichtung eigentlich gar nicht leisten, obwohl hier ein Bedarf an frisch geräuchertem Fisch ausserordentlich hoch ist.

Die Aufgabe der vorliegenden Erfindung ist. eine Einrichtung zum Räuchern anzugeben, welche die Nachteile des Standes der Technik nicht aufweist.

Diese Aufgabe wird bei der Einrichtung der eingangs genannten Gattung erfindungsgemäss so gelöst, wie dies im kennzeichnenden Teil des Anspruchs 1 definiert ist.

Nachstehend werden Ausführungsbeispiele der vorliegenden Erfindung anhand der beiliegenden Zeichnungen näher erläutert. Es zeigt:

Fig. 1 in einer Frontansicht die vorliegende Einrichtung zum Räuchern,

Fig. 2 in einer Seitenansicht die Einrichtung gemäss Fig. 1,

Fig. 3 in einer Seitenansicht und vergrössert eine zweite Ausführungsform der vorliegenden Einrichtung,

Fig. 4 in einer Seitenansicht die untere Partie einer weiteren Ausführungsform der vorliegenden Einrichtung und

Fig. 5 in einer Frontansicht die Einrichtung gemäss Fig. 4.

Die vorliegende Einrichtung, die unter anderem zum Kalträuchern geeignet ist, enthält eine Räucherkammer 1 und einen Rauchgenerator 10, welcher der Räucherkammer 1 zugeordnet ist.

Die Räucherkammer 1 weist einen Mantel 2 von einem vorteilhaft quadratischen Grundriss auf, bei dem eine der Seitenwände desselben durch eine Tür 3 gebildet ist. Im oberen Bereich der Räucherkammer 1 befindet sich ein kegelförmiger Ansatz 4, dessen Spitze mit einem Stutzen 5 zum Anschluss von Abzugsrohren (nicht dargestellt) versehen ist.

Im Abzugsstutzen 5 kann ein an sich bekannter Schieber (nicht dargestellt) angeordnet sein, welcher eine Aenderung des Querschnittes des Abzugsstutzens 5 ermöglicht. Im Inneren der Räucherkammer 1 befinden sich Vorrichtungen zur Halterung der zu räuchernden Ware, insbesondere von Fisch. Der Boden 6 der Räucherkammer 1 ist mit vier Beinen 7 versehen.

Der Rauchgenerator 10 weist ein Gehäuse 11 auf, dessen Inneres durch eine Tür 12 an der Frontseite des Gehäuses 11 zugänglich ist. Die Tür 12 ist mit Hilfe von Scharnieren 13 am Gehäusekörper angeschlagen und sie ist mit Hilfe eines Türgriffes 14 verschliessbar. Die Tür 12 weist etwa im mittleren Bereich derselben eine durchgehende Oeffnung 15 auf. An der Aussenseite der Tür 12 ist ein Gebläse 16 angeflanscht, und zwar derart, dass die Austrittspartie des Gebläses 16 in die Oeffnung 15 der Tür 12 mündet. Die durch das Gebläse 16 angesaugte Luft kann auf diesem Wege in das Innere des Gehäuses 11 des Rauchgenerators 10 gelangen.

Auf dem Boden des Generatorgehäuses 11 befindet sich ein Behälter 18 für die Aufnahme von Brennmaterial 19, welches zum Räuchern erforderlich ist. Als Brennmaterial 19 wird in der Regel Sägemehl verwendet. Dieser Brennmaterialbehälter 18 ist auf geeigneten und an sich bekannten Stützmitteln (nicht dargestellt) im Gehäuse 11 abgestützt, damit er aus dem Gehäuse 11 herausgezogen werden kann, um diesen reinigen und mit neuem Brennmaterial füllen zu können.

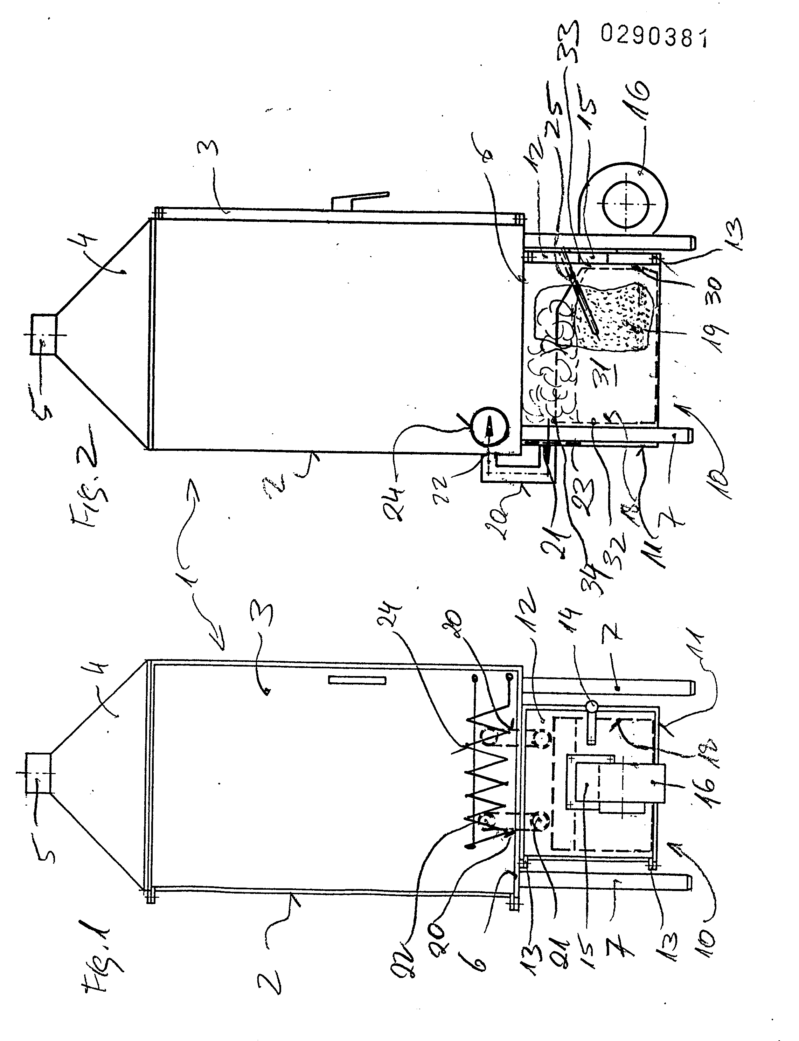

Der Mantel des Gehäuses 11 und zumindest der Boden 6 der Räucherkammer 1 sind aus einem wärmeleitenden Material, beispielsweise aus Stahl. Die Decke des Gehäuses 11 und der Boden 6 der Räucherkammer 1 sind bei der Einrichtung gemäss Fig. 1 bis 3 derart innig miteinander verbunden, dass ein möglichst guter Wärmeübergang vom Rauchgenerator 10 zur Räucherkammer 1 stattfindet. Vorteilhaft kann der Rauchgenerator 10 so ausgeführt sein, dass der Boden 6 der Räucherkammer 1 zugleich die Decke des Rauchgenerators 10 bildet. Eine solche Ausführung der vorliegenden Einrichtung ist vor allem zum Warmräuchern geeignet, weil die durch das Brennmaterial 19 gelieferte Energie am besten ausgenützt werden kann.

Damit der im Generator 10 erzeugte Rauch in die Räucherkammer 1 gelangen kann, ist diese mittels Rohre 20 mit dem Generator 10 verbunden. In dieser Einrichtung werden zwei Rohre 20 verwendet und sie befinden sich im rückwärtigen Bereich derselben. Die erste Mündung 21, auch Einlassmündung genannt, der Rohre 20 befindet sich in der rückwärtigen Wand des Generatorgehäuses 11, und zwar im oberen Bereich desselben, so dass sie in der Nähe der Decke des Feuerungsgehäuses 11 bzw. des Bodens 6 der Räucherkammer 1 ist. Die zweite Mündung 22, die auch Austrittsmündung genannt wird. der Rohre 20 befindet sich im unteren Teil der rückwärtigen Wand der Räucherkammer 1. und zwar in der Nähe der Oberseite des Bodens 6. Das jeweilige Verbindungsrohr 20 ist pratisch U-förmig und die Schenkelpartien dieser Rohre 20 sind an das Gehäuse 11 und an die Räucherkammer 1 angeschlossen.

Die Rohre 20 sind im dargestellten Fall nicht wärmeisoliert, so dass der Rauch, der durch diese strömt, sich vor allem im Winter abkühlen kann, wenn die Einrichtung im Freien aufgestellt ist. Diese Massnahme hat zur Folge, dass der Rauch. der in die Räucherkammer 1 gelangt. eine sehr niedrige Temperatur, von beispielsweise 27 Grad C, aufweisen kann. Dies ermöglicht das erwähnte Kalträuchern unter dem Einsatz von kostengünstigen Mitteln. Im Sommer oder wenn die Einrichtung in geschlossenen Räumen aufgestellt ist. kann diesen Rohren 20 eine Kühlvorrichtung zugeordnet sein, um die gewünschte niedrige Temperatur von Rauch zu erreichen. Diese Kühlvorrichtung kann als ein Luftgebläse oder als ein die Rohre 20 umschliessendes Gehäuse ausgeführt sein, durch welches ein Kühlmittel geführt wird. Der Grad der Kühlung kann bei dieser zweiten Kühlvorrichtung durch die Menge des durch das Kühlgehäuse strömenden Kühlmittels gesteuert werden.

Der Querschnitt der Verbindungsrohre 20 ist unter Berücksichtigung des Querschnittes des Abzugsstutzens 5 gewählt, und zwar deswegen, damit in der Räucherkammer 1 ein leichter Ueberdruck gegenüber der Umgebung der Einrichtung herrscht. Der Querschnitt der zwischen dem Generator 10 und der Räucherkammer 1 zur Verfügung stehenden Oeffnung lässt sich durch die Anzahl der verwendeten Rohre 20 oder/und durch die Grösse des Querschnittes dieser Rohre 20 steuern. Um den Ueberdruck in der Räucherkammer 1 zu erreichen, sollte der Querschnitt des Abzugsstutzens 5 kleiner sein als der Gesamtquerschnitt aller Verbindungsrohre 20. Andernfalls kann der Querschnitt des Abzugsstutzens 5 durch eine geeignete Einstellung des Schiebers wie gewünscht eingestellt werden.

Bei der in Fig. 1 bis 3 dargestellten Ausführung dieser Einrichtung liegen die Eintrittsmündungen 21 der Rohre 20 gegenüber der Austrittsmündung 15 des Gebläses 16. Diese Anordnung der Rohre 20 kann ebenfalls zur Erhöhung des Druckes in der Räucherkammer 1 beitragen. Wenn erforderlich, können die Rohre 20 den Seitenwänden der Einrichtung zugeordnet sein, und zwar so, dass alle Rohre 20 an derselben Seite der Einrichtung angebracht sind oder dass sich die Rohre 20 an mehreren Seiten der Einrichtung befinden.

In der unteren Mündung 21 der Rohre 20, die sich im Rauchentwickler 10 befindet, befindet sich ein Sieb 23. Dieses Sieb 23 verhindert weitgehend, dass Flugasche aus dem Rauchentwickler 10 in die Räucherkammer 1 gelangt.

Vor der Austrittsmündung 22 der Rohre 20 befindet sich in der Räucherkammer 1 ein Hilfsheizkörper 24. Dieser ist als eine Heizwendel ausgeführt, welche vor den oberen Mündungen 22 der Verbindungsrohre 20. d.h. in einem Abstand von der Hinterwand der Räucherkammer 1, liegend angeordnet ist. Dieser Hilfsheizkörper 24 wird nur dann in Betrieb genommen, wenn die Temperatur der durch die Verbindungsrohe 20 strömenden Rauchgase nicht dazu ausreicht. um die Ware während des Räuchervorganges auf die gewünschte Temperatur zu bringen und/oder sie auf der gewünschten Temperatur zu halten.

An der Innenseite der Tür 12 des Rauchgenerators 10 ist ein etwa stabförmiges Zündelement 25 angebracht, das von der Innenwand der Tür 12 absteht und in das Innere des Gehäuses 11 somit ragen kann. Dieses Zündelement 25 dient zum Anzünden des Brennmaterials 19 im Behälter 18 am Anfang des Räuchervorganges, wobei es wahlweise auch noch eine gewisse Zeit nach dem eigentlichen Anzünden des Brennmaterials in Betrieb gehalten werden kann. Die Länge dieses Heizelementes 25 ist so gewählt. dass sein freies Ende sich bei geschlossener Tür 12 im Bereich des für das Brennmaterial 19 vorgesehenen Raumes im Behälter 18 befindet. Dieses Zündelement 25 kann ein Stab sein, in dem sich ein elektrischer Heizkörper befindet. Zum Anzünden des Brennmaterials 19 im Behälter 18 wird das Zündlement 25 zum Glühen gebracht.

Die Einrichtung weist auch eine Steuervorrichtung (nicht dargestellt) auf, welche einer bekannten Art sein kann. Diese erhält die Ist-Werte von einem Temperaturfühler üblicher Art, der sich in der Räucherkammer 1 befindet. Der Ausgang der Steuervorrichtung ist an das Gebläse 16 des Rauchgenerators 10. an den Heizkörper 24 in der Räucherkammer 1 und an den Zündstab 25 angeschlossen. Die Steuervorrichtung enthält ferner Betätigungselemente, mit deren Hilfe die Soll-Werte entsprechend dem gewünschten Verlauf des Räucherns der jeweiligen Ware eingestellt werden können. Diese Steuervorrichtung steuert dann den Betrieb des Gebläses 16, die Menge der den Heizkörpern 24 und 25 zugeführten elektrischen Energie sowie die Zeitspannen, während welcher Strom den Heizkörpern und dem Gebläse zugeführt werden soll. Sie kann auch den Betrieb der Kühlvorrichtung an den Ver bindungsrohren 20 steuern.

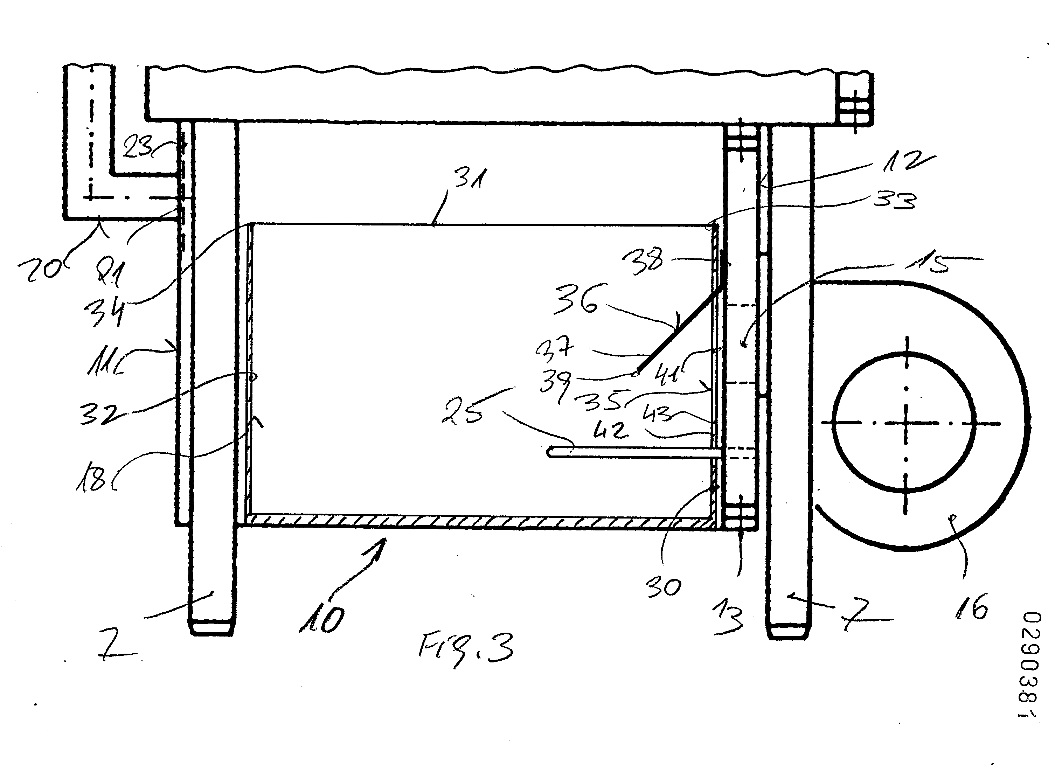

Der Behälter 18 im Rauchgenerator 10 ist im wesentlichen so ausgebildet, dass er vier sich an einen Boden anschliessende vertikale Wände aufweist. Damit der Zündstab 25. welcher von der Innenseite der Generatortür 12 schräg abwärts absteht. in das Innere des Behälters 18 gelangen kann, ist die Frontwand 30 des Behälters 18 bei der in Fig. 1 und 2 dargestellten Ausführungsform der vorliegenden Einrichtung niedriger als die Seitenwände 31 des Behälters 18. Ueber der oberen Kante 33 der Frontwand 30 gelangt nicht nur der Zündstab 25 sondern auch die vom Gebläse 16 an der Aussenwand der Tür 12 geförderte Luft in das Brennmaterial 19. Diese Luft unterstützt die Bildung von Glut im Brennmaterial 19 und zudem hilft sie. Rauch durch die Verbindungsrohre 20 in die Räucherkammer 1 zu transportieren. Damit Rauch möglichst ungehindert in die Rohre 20 strömen kann, liegt die obere Kante 34 der Hinterwand 32 des Behälters 18 unterhalb der unteren Rohrmündungen 21.

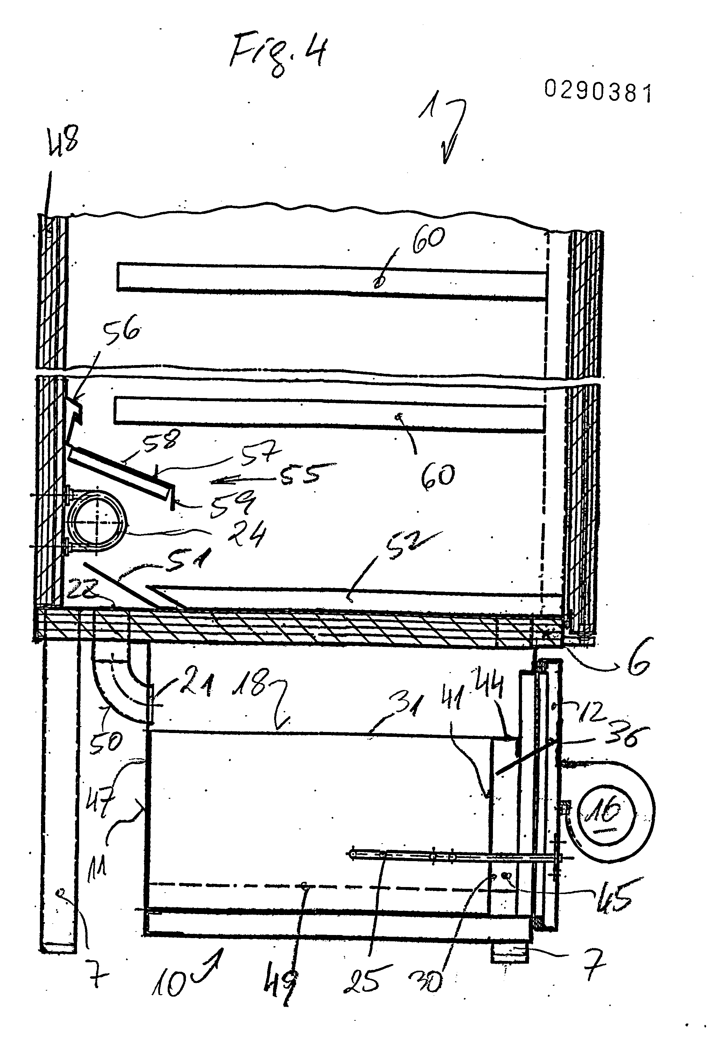

Damit das Brennmaterial 19 im Behälter 18 vollständig verbrennen kann, muss die Anzündung desselben im unteren und vorderen, d.h. der Tür 12 nahen Bereich des Behälters 18 erfolgen. Eine zweite Ausführungsform der vorliegenden Einrichtung, welche in Fig. 3 dargestellt ist, ermöglicht eine solche Art der Anzündung und Verbrennung des Brennmaterials 19. Die Höhe aller vier vertikalen Wände 30, 31 und 32 des Behälters 18 ist in diesem Fall gleich. Dafür aber weist die Vorderwand 30 des Behälters 18 eine Oeffnung 35 auf, welche der Austrittsöffnung des Gebläses 16 gegenüberliegt. Obwohl die Einrichtung in Fig. 3 in einer Seitenansicht dargestellt ist. ist der Behälter 18 in einem vertikalen Schnitt gezeigt, damit diese Oeffnung 35 ersichtlich ist. Der Zündstab 25 liegt praktisch horizontal und er befindet sich im unteren Bereich der Tür 12, damit er möglichst nahe am Boden des Behälters 18 ist. Der untere Rand der Wandöffnung 35 befindet sich noch unter dem Zündstab 25, damit dieser beim Schliessen bzw. Oeffnen der Tür 12 in das Brennmaterial 19 eindringen kann.

Ueber der Durchgangsöffnung 15 in der Tür 12 befindet sich eine schräg verlaufende Ablenkplatte 36. welche diese Oeffnung 15 zumindest teilweise überdeckt. Durch diese Platte 36 wird die vom Gebläse 16 gelieferte Luft nach unten gegen den Zündstab 25 und somit auch gegen den Boden des Behälters 18 hin abgelenkt. Dadurch wird die Bildung von Glut im Brennmaterial 19. welches sich im vorderen Bereich des Behälters 18 befindet, unterstützt. Die Ablenkplatte 36 ist als ein abgewinkeltes Blechstück ausgeführt, bei dem die eine Flanke 37 desselben zur Ablenkung des Luftstromes dient. während die andere Flanke 38 desselben an der Tür 12 in bekannter Weise flach befestigt ist. Die obere Kante der Oeffnung 35 in der Frontwand 30 des Behäl ters 18 liegt über der schrägen Flanke 37 der Platte 36. so dass auch diese Flanke 37 beim Schliessen der Tür 12 in das Brennmaterial 19 eingedrückt werden kann. Hierbei wird ein Freiraum im Brennmaterial 19 unter der schrägen Plattenflanke 37 gebildet, durch welchen die durch das Gebläse 16 geförderte Luft zum Zündstab 25 gelangen kann.

Damit möglichst wenig Sägemehl. welches bis zum oberen Rand des Behälters 18 eingefüllt ist (Fig. 2), durch die Oeffnung 35 in der Behälterwand durchfällt, weist diese Oeffnung 35 einen schmäleren oberen Abschnitt 41 und einen breiteren unteren Abschnitt 42 auf, die sich übereinander befinden. Die Durchgangsöffnung 15 in der Tür 12. an deren Aussenseite das Gebläse 16 befestigt ist, hat einen etwa quadratischen oder viereckigen Umriss. wobei aus Fig. 3 nur die Höhe dieser Oeffnung 15 ersichtlich ist. Diese Durchgangsöffnung 15 steht dem oberen Abschnitt 41 der Oeffnung 35 in der Frontwand 30 des Behälters 18 gegenüber. Durch diese zwei Oeffnungen 15 und 35 gelangt die Luft vom Gebläse 16 in das Brennmaterial 19. Für den Betrieb dieser Einrichtung genügt es somit, wenn die Ablenkplatte 36 nur ein wenig breiter ist als die Türöffnung 15.

Die Länge des Zündstabes 25. der sich gleich wie die Ablenkplatte 36 etwa in der Mitte der Breite der Tür 12 befindet, ist grösser als der Abstand zwischen der vorderen Kante 39 der Ab lenkplatte 36 und der Tür 12. Folglich bewegt sich die Spitze des Zündstabes 25 entlang einem Kreis, wenn die Tür 12 geschlossen oder geöffnet wird, dessen Durchmes ser grösser ist als der Durchmesser jenes Kreises. entlang welchem sich die den Scharnieren 13 zugewandte Ecke der Kante 39 der Ablenkplatte 36 zugleich bewegt. Die Behälteröffnung 35 hat daher die zwei genannten Abschnitte 41 und 42 von unterschiedlicher Breite. Der obere Abschnitt 41 der Oeffnung 35 ist schmäler als der untere Oeffnungsabschnitt 42. Da der obere Oeffnungsabschnitt 41 für die Aufnahme der schrägen Plattenflanke 37 bestimmt ist, ist die Breite desselben daher nur ein wenig grösser als die Breite der Ablenkplatte 36. Der untere Abschnitt 42 der Wandöffnung 35 ist für den Durchgang des Zündstabes 25 bestimmt und dieser Oeffnungsabschnitt 42 ist so breit. dass auch die Spitze des Zündstabes 25 beim Bewegen der Tür 12 durch diesen ungehindert hindurchgehen kann. Dieser unterer Oeffnungsabschnitt 42 hat im wesentlichen die Form eines Schlitzes, der sich zumindest einseitig vom oberen Oeffnungsabschnitt 41 und unter diesem weiter nach rechts erstreckt, wenn sich die Türangel 13 links befindet. Aus Fig. 3 ist auch die Kante 43 ersichtlich. welche sich am Uebergang zwischen den zwei Oeffnungsabschnitten 41 und 42 befindet.

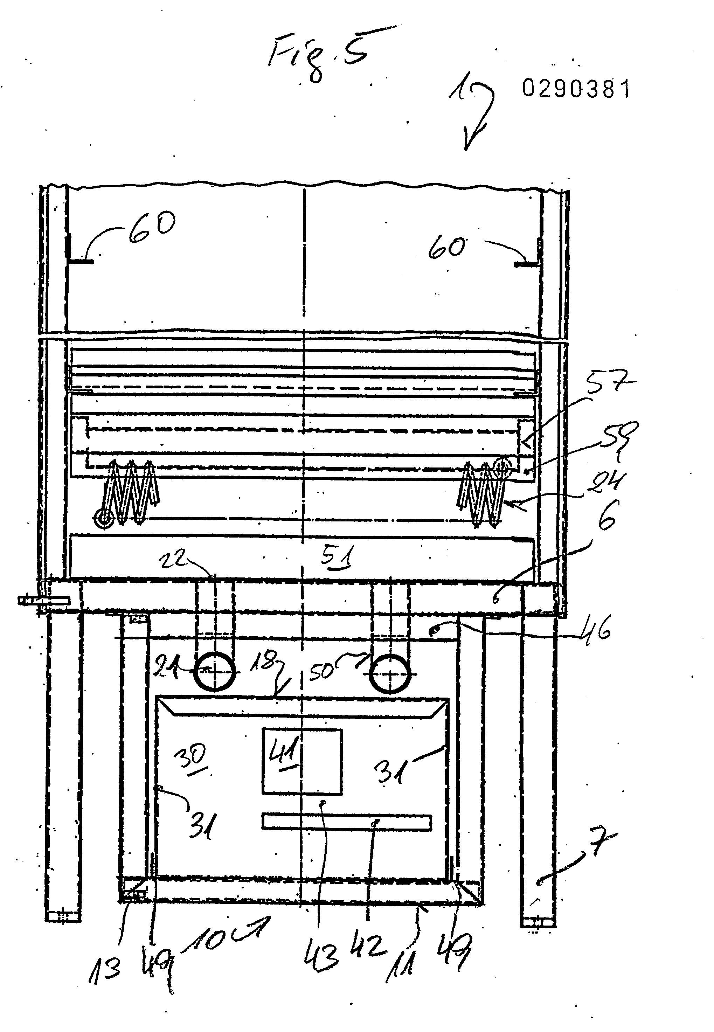

In Fig. 4 und 5 ist eine weitere Ausführung der vorliegenden Einrichtung dargestellt. Die Einrichtung ist in Fig. 4 in einer Seitenansicht und in Fig. 5 in einer Frontansicht dargestellt. Als nachteilig gilt beim Behälter 18 gemäss Fig. 3, dass das Brenmaterial 19 durch die verhältnismässig grossflächige Oeffnung 35 aus dem Behälter 18 herausfallen kann. Aus diesem Grund sind die Oeffnungen 41 und 42 in der Frontseite 30 des Brennmaterial-Behälters 18 bei dieser weiteren Ausführungsform der Einrichtung (Fig. 5) als voneinander getrennte Oeffnungen ausgeführt, zwischen welchen sich ein Steg 43 aus dem Material des Behälters 18 erstreckt. Dieser Steg 43 hält das Brennmaterial 19 im Behälter 18 weitgehend zurück.

Zur Erleichterung der Handhabung des Brennmaterial-Behälters 18 ist die vordere, obere Kante desselben mit einem Griff 44 versehen. Dieser Griff 44 ist als ein im Querschnitt praktisch Lförmig umgebogener und nach vorne gerichteter Abschnitt des Materials des Behälters 18 ausgeführt. Zwischen der Frontwand 30 des Behälters 18 und der Tür 12 des Rauchgenerators 10 bleibt unter diesem Griff 44 ein Spalt 45 frei. Die Ablenkplatte 36 erstreckt sich in diesem Spalt 45 von der Tür 12 nur bis zur Vorderseite der Frontplatte 30. und zwar bis zur oberen Kante der oberen Oeffnung 41. Dies erlaubt, die obere Oeffnung 41 in der Frontplatte 30 des Beheälters 36 schmäler auszuführen als die Ablenkplatte 36. was ebenfalls dazu beiträgt. dass weniger Brennmaterial aus dem Behälter 18 herausfällt. wenn dieser gehandhabt wird. Zur Führung des Behälters 18 ist der Boden des Gehäuses 11 mit Führungsschienen 49 versehen, von welchen ie eine sich in den unteren Eckpartien des Gehäuses 11 und in einem kleinen Abstand von der jeweiligen Seitenwand dieses Gehäuses 11 befindet.

Das Gehäuse 11 des Generators 10 sowie die Tür 12 desselben sind doppelwandig ausgeführt. was die Menge der an die Umgebung abgegebenen Wärme aus dem Rauchgenerator 10 vermindert. Bei dieser Einrichtung weist das Gehäuse 11 sogar eine Deckwand 46, welche ebenfalls zwei sich in einem Abstand voneinander befindliche Teilwände aufweist. Der Boden 6 der Räucherkammer 1 ist mit einem wärmeisolierenden Material ausgefüllt. Diese Massnahmen bezwecken, dass möglichst keine Wärme vom Rauchgenerator 10 in die Räucherkammer 1 durch die gemeinsamen Wände direkt übergeht. Denn diese Wärme würde die Erzielung der für das Kalträuchern erforderlichen niedrigen Temperaturen in der Räucherkammer 1 verhindern.

Bei der Einrichtung gemäss Fig. 4 und 5 ist die Tiefe des Rauchgenerators 10 kleiner als die Tiefe der Räucherkammer 1. so dass die Rückwand 47 des Generatorgehäuses 11 sich in einem Abstand von der Rückwand 48 der Räucherkammer 1 befindet und unter der Räucherkammer 1 liegt. Die Verbindungsrohre 50 sind in diesem Fall L-förmig und die Ebenen der Mündungen 21 und 22 derselben stehen senkrecht aufeinander. Die Eintrittsmündung 21 der Verbindungsrohre 50 liegt in der Hinterwand 47 des Gehäuses 11. Die Austrittsmündung 22 der Verbindungsrohre 50 liegt im Boden 6 der Räucherkammer 1. Eine solche Anordnung der Verbindungsrohre 50 vermindert die Einbautiefe der Einrichtung. Im Raum. der sich hinter dem Gehäuse 11 und unter der Räucherkammer 1 befindet, kann die bereits besprochene Kühlvorrichtung für die Verbindungsrohre 50 untergebracht sein. Während des Warmräucherns tropft Fett auf den Boden 6 der Räucherkammer 1. Damit kein Fett in die Verbindungsrohre 50 und dann in den Rauchgenerator 10 gelangen kann, sind die Austrittsmündungen 22 der Rohre 50, welche sich im der Rückwand nahen Bereich des Bodens 6 liegen, mittels eines Schutzbleches 51 überdeckt, welcher sich schräg über diesen erstreckt und einerends auf dem Boden 6 befetsigt ist. Auf dem Boden 6 ist auch eine Tropfschale 52 aufgestellt.

Der Hilfsheizkörper 24 ist an der Innenseite der Hinterwand 48 und in einem Abstand vom Boden 6 der Räucherkammer 1 angeordnet. Vorteilhaft erstreckt sich dieser Heizkörper 24 über die ganze Breite der Hinterwand 48. Um auch diesen Heizkörper 24 gegen tropfendes Fett zu schützen, befindet sich dieser unter einem Schirm 55. Dieser Schirm 55 weist einen Basisteil 56 auf, welcher als eine Leiste von etwa S-förmigem Profil ausgeführt ist. Die eine Endpartie dieser horizontal angeordneten Leiste 56 ist an der Hinterwand 48 befestigt. Die andere Endpartie dieser Leiste 56 steht von der Hinterwand 48 ab, wobei zwischen dieser zweiten Endpartie und der Hinterwand 48 ein Spalt vorhanden ist. Dies ermöglicht, dass mit der Innenseite dieser hakenförmigen zweiten Endpartie der Leiste 56 eine der Randpartien eines im Querschnitt ähnlich geformten Schutzbleches 57 in Engriff steht. Das Schutzblech 57 hängt auf der Leiste 56.

An diese hakenförmige Partie des Schutzbleches 57 schliesst sich, im Querschnitt gesehen, eine mittlere Partie 58 desselben an, die plan ist und die sich ebenfalls über beinahe die ganze Breite der Räucherkammer 1 erstreckt. Diese mittlere Schutzblechpartie 58 ist so bemessen, dass eine Tropfkante 59. welche die zweite Endpartie des Querschnittes dieses Schutzbleches 57 bildet, sich vom Heizkörper 25 in einem Abstand befindet. Diese Tropfkante 59 liegt zudem über der bereits erwähnten Tropfschale 52, in der das Fett gesammelt wird. An den Seitenwänden der Räucherkammer 1 sind Führungsschienen 60 angebracht. auf welchen Schalen zur Aufnahme von Räuchergut oder Mittel zur Aufhängung von Räuchergut abgestützt werden können.

Diese Einrichtung ist eine unaufwändige Räuchereinrichtung, mit deren Hilfe Ware nicht nur warm sondern auch kalt geräuchert werden kann. Die Ausbildung dieser Einrichtung ermöglicht Temperaturen in der Räucherkammer 1 zu erzielen, welche zwischen etwa 27 Grad C und 110 Grad C liegen.

Alle hier beschriebenen Teile der vorliegenden Einrichtung sind als erfindungswesentlich zu betrachten.

## Patentansprüche

1. Einrichtung zum Räuchern mit einer Räucherkammer (1) und einem Rauchgenerator (10). dadurch gekennzeichnet, dass der Rauchgenerator (10) sich unterhalb der Räucherkammer (1) befindet und dass er dabei an die Räucherkammer strömungsmässig angeschlossen ist.

2. Einrichtung nach Anspruch 1. dadurch gekennzeichnet, dass der Rauchgenerator (10) ein Gehäuse (11) aufweist. dass an einer der vertikalen Wände (12) des Gehäuses (11) ein Gebläse (16) angebracht ist, dessen Austrittsöffnung in das Innere des Gehäuses (11) mündet, und dass an einer weiteren Wand des Gehäuses (11) wenigstens ein Rohr (20;50) angeschlossen ist, mit dessen Hilfe der Rauchgenerator (10) an die Räucherkammer (1) strömungsmässig angeschlossen ist.

3. Einrichtung nach Anspruch 2, dadurch gekennzeichnet, dass im Gehäuse (11) des Rauchgenerators (10) sich ein Behälter (18) befindet, welcher mit festem Brennstoff (19), wie z.B. Sägemehl, gefüllt sein kann, und dass der Behälter (18) im Bereich der Austrittsöffnung (15) des Gebläses (16) seitlich wenigstens teilweise offen ist.

4. Einrichtung nach Anspruch 3. dadurch gekennzeichnet, dass wenigstens ein Zündstab (25) vorgesehen ist. welcher so angeordnet ist, dass er in jene Partie des Gehäuses (11) ragt, in welcher sich das Brennmaterial (19) während des Betriebes der Einrichtung befindet.

5. Einrichtung nach Anspruch 4, dadurch gekennzeichnet, dass das Gehäuse (11) des Rauchgenerators (10) mit einer Tür (12) versehen ist, dass das Gebläse (16) an dieser Tür (12) montiert ist und dass von der Innenseite dieser Tür (12) der Zündstab (25) absteht.

6. Einrichtung nach Anspruch 3. dadurch gekennzeichnet. dass die Mündung (21) des Verbindungsrohrs (20n) im Rauchgenerator

(10) sich oberhalb der oberen Kante (34) der dieser Mündung (21) zugewandten Wand (32) des Brennstoffbehälters (18) liegt und dass die Mündung (22) des Verbindungsrohrs in der Räucherkammer (1) sich im unteren Bereich dieser Kammer (1) befindet.

7. Einrichtung nach Anspruch 6, dadurch gekennzeichnet. dass ein Heizelement (24) sich vor der Mündung (22) des Verbindungsrohres (20;50) in der Räucherkammer (1) befindet und dass über diesem Heizelement ein Schirm (55) angeordnet ist.

8. Einrichtung nach Anspruch 2, dadurch gekennzeichnet, dass die sich im Rauchgenerator (10) befindliche Mündung (21) des Verbindungsrohres (20;50) mit einem Sieb (23) zugedeckt ist.

9. Einrichtung nach Anspruch 3, dadurch gekennzeichnet, dass in der Frontwand (30) des Behälters (18) eine Oeffnung (35) ausgeführt ist, durch welche der Zündstab (25) hindurchgehen kann, der sich senkrecht zum unteren Abschnitt der Innenseite der Tür (12) des Rauchentwicklers (10) erstreckt.

10. Einrichtung nach Anspruch 9, dadurch gekennzeichnet, dass eine Ablenkplatte (36) der Austrittspartie (15) des Gebläses (16) gegenübersteht. dass diese Ablenkplatte (36) eine schräg gegen den Boden des Behälters (18) hin gerichtete Flanke (37) aufweist und dass die Wandöffnung (35) zwei Abschnitte (41,42) von unterschiedlicher Breite aufweist, von welchen der obere Abschnitt für den Durchlass der Ablenkplatte (36) und der untere Oeffnungsabschnitt für den Durchlass des Zündstabes (25) ausgebildet ist.

Fig.1

Fig.2

0290381

0290381

Fig.3

10

1

2

7

12
33
15
16
13
30
31
38
36
47
39
35
43
42
25
32
18
14
34
21
20
23

Fig.4

0290381

Fig. 5

0290381